# EUROPEAN PATENT SPECIFICATION

(11) **EP 0 453 840 B1**
(45) Date of publication and mention of the grant of the patent: **05.07.2000**
(21) Application number: 91105440.1
(22) Date of filing: 05.04.1991
(51) Int. Cl.: G06F 17/30

(54) **Data display apparatus**
Datenanzeigegerät
Dispositif d'affichage de données

(30) Priority: 24.04.1990 JP 10654990
(43) Date of publication of application: 30.10.1991
(73) Proprietor: Casio Computer Co., Ltd., Shibuya-ku, Tokyo 151-8543 (JP)
(72) Inventor: Onodera, Kouetsu, c/o Pat. Dpt., Dev. Div., Hamura, Hamura-machi, Nishitama-gun Tokyo 190-11 (JP)
(74) Representative: Grünecker, Kinkeldey, Stockmair & Schwanhäusser Anwaltssozietät

(56) References cited:
- EP-A- 0 342 964
- PATENT ABSTRACTS OF JAPAN vol. 013, no. 112 (P-844) 17 March 1989 & JP-A-63 286 969 ( FUJI XEROX CO LTD )

## Description

The present invention relates to a data display apparatus for quickly displaying designated data according to the preambles of independent claims 1 and 3.

Recently, data processing systems constituted by computers have been increasingly used to automate various types of jobs. In such a system, when, for example, a data slip issuing operation is to be performed, the following operation is sometimes performed. A plurality of records constituting a hierarchical structure and stored in a file such as a disk are selectively designated first. Data is then input to each designated record. In this case, each record has a key for identifying it. Designation of a given record is generally performed by designating its key.

For example, designation of a key is performed in the following manner. When a given record is designated as an input item, an input screen associated with the record is displayed on a display apparatus. When a lower or upper level record succeeding or preceding the given record is designated as a destination input item by operating the "next page" key or the "previous page" key of a keyboard as an input apparatus, the keys of lower or upper level records associated with the currently designated record are searched by referring to a file (normally a directory formed in a file), and the searched data is displayed on the display apparatus. When the cursor is moved to the position of a desired key of these keys by operating the "cursor" key or the like, and input designation is performed by the "enter" key or the like, it is determined that a destination record is designated. As a result, a record corresponding to the designated key is read out from the file, and an input screen associated with the record is displayed on the display apparatus to allow a data input operation.

As described above, a destination record is selected by using, e.g., the "next page" key or the "previous page" key, and the "cursor" key. Therefore, a desired record cannot be instantaneously designated. That is, a desired record cannot be instantaneously accessed.

Furthermore, in order to designate a record separated from the current screen by two levels or more, the above-described operation must be repeated a plurality of times, thus requiring cumbersome operations.

EP-A-0 342 964 discloses a system according to which a group of records is selected from a storage by selecting an index from an index menu, wherein the index represents the group of records. Upon said index having been selected, the records of the specified groups are displayed in a list format on a displayed screen. One of the displayed records can be further selected in order to be displayed in a card format.

It is the object of the present invention to allow quick designation of hidden data such as a record which is not displayed on a display screen.

This object is solved by the subject matters of independent apparatus claims 1 and 3.

This invention can be more fully understood from the following detailed description when considering the accompanying drawings, in which:
Fig. 1 is a block diagram showing an arrangement of the first embodiment of the present invention;
Fig. 2 is a block diagram showing an arrangement of the second embodiment of the present invention;
Fig. 3 is a view showing a hierarchical structure of records;
Fig. 4 is a flow chart for explaining a display operation;
Figs. 5A, 5B, 5C, and 5D are views showing changes in display screen;
Fig. 6 is a flow chart for explaining an icon designating operation;
Fig. 7 is a block diagram showing an arrangement of the third embodiment of the present invention;
Fig. 8 is a block diagram showing an arrangement of the fourth embodiment of the present invention;
Fig. 9 is a view for explaining an arrangement of a management table;
Fig. 10 is a view for explaining a connection arrangement of management tables;
Figs. 11A and 11B are views respectively showing display images;
Fig. 12 is a flow chart for explaining an operation;
Figs. 13A and 13B are views respectively showing display images in the fourth embodiment; and
Fig. 14 is a flow chart for explaining an operation.

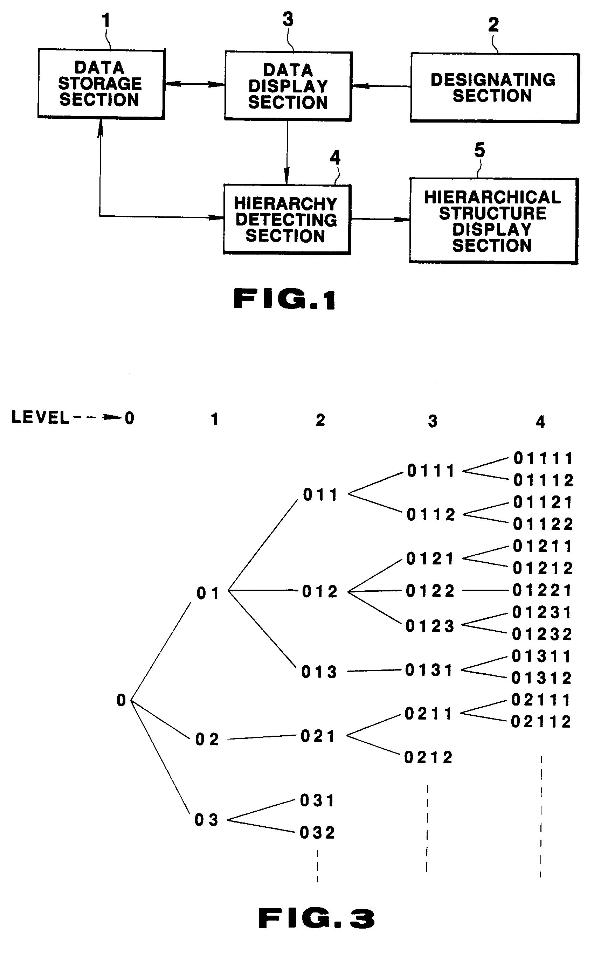

Fig. 1 is a block diagram showing an arrangement of the first embodiment of the present invention.

The first embodiment comprises the following components:
(1) a data storage section 1 (for storing a plurality of data which constitute a hierarchical structure and are respectively identified by keys), e.g., a disk for storing records constituting a plurality of levels;
(2) a designating section 2 (for designating a key), e.g., a pointing device such as a mouse;
(3) a data display section 3 (for reading out data corresponding to the key designated by the designating section 2 from the data storage section 1 and displaying it), e.g., a display section such as a CRT and a CPU for reading out a record designated by the pointing device from the disk, and causing the display section to display an input screen associated with the record so as to allow a data input operation;
(4) a hierarchy detecting section 4 (for checking the hierarchical structure of data of a lower level succeeding or following the data displayed by the data display section 3 by referring to the data storage section 1), e.g., the above-mentioned CPU, which searches records of two lower levels succeeding the record designated by the pointing device, from the above-mentioned disk; and
(5) a hierarchical structure display section 5 (for visually displaying a hierarchical structure on the basis of the hierarchical structure checked by the hierarchy detecting section 4), e.g., the display section and the CPU, which causes the display section to display the keys of the searched records corresponding to the two lower levels (in this case, the keys are displayed in a graphic pattern which allows quick recognition of the hierarchical structure of the corresponding records).

An operation of the first embodiment will be described below.

When a key is designated by the designating section 2, the data display section 3 reads out data corresponding to the designated key from the data storage section 1 and displays it. The hierarchy detecting section 4 checks the hierarchical structure of lower level data succeeding the displayed data by referring to the data storage section 1. The hierarchical structure display section 5 displays a graphic pattern as a visual representation of the hierarchical structure on the basis of the checked hierarchical structure.

With this operation, even while data is input to a given record, a display operation is performed to allow quick recognition of records succeeding the given record. Therefore, a user can instantaneously designate a desired record as a new input item.

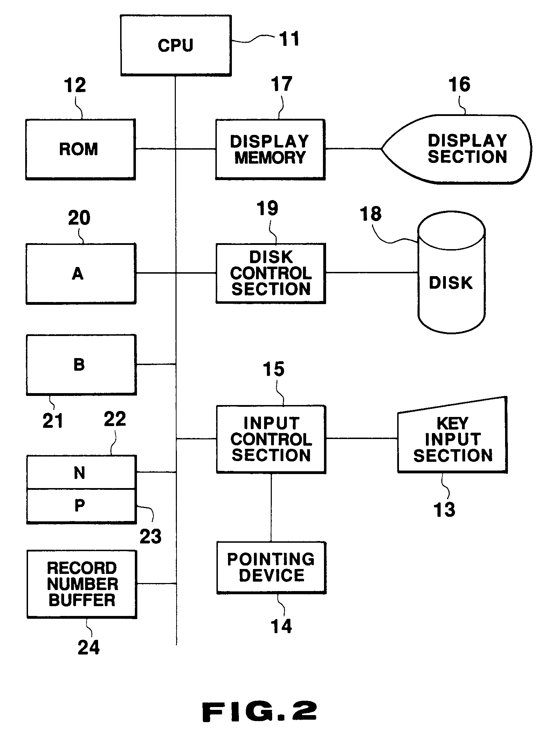

The second embodiment of the present invention will be described next with reference to Figs. 2 through 6.

Fig. 2 shows an automatic data processing (ADP) system to which a data display apparatus of this embodiment is applied. Referring to Fig. 2, reference numeral 11 denotes a CPU for performing overall control; 12, a ROM for storing control programs and the like to be executed by the CPU 11; 13, a key input section, such as a keyboard, for performing a data input operation; 14, a pointing device, such as a mouse, for performing an input item designating operation, i.e., selecting/designating the key of a record; 15, an input control section for generating key data and position data corresponding to operations of the input section 13 and the pointing device 14; 16, a display section such as a CRT; 17, a display memory for the display section 16; 18, a disk as a file for storing records; 19, a disk control section for controlling the disk 18; 20, an A buffer as a record memory for storing the contents of all the records on a level lower than that of a designated record read out from the disk 18 by one level; 21, a B buffer as a key memory for storing the keys of all the records on a level lower than that of a designated record read out from the disk 18 by two levels; 22, an N buffer as a level memory for storing the level of a designated record; 23, a P buffer as a position memory for storing the position of the designated record on its level; and 24, a record number buffer for storing the record number of a designated record. In this case, a record number is used as the key of each record. In addition, the respective buffers 20 through 24 are constituted by RAMs and the like.

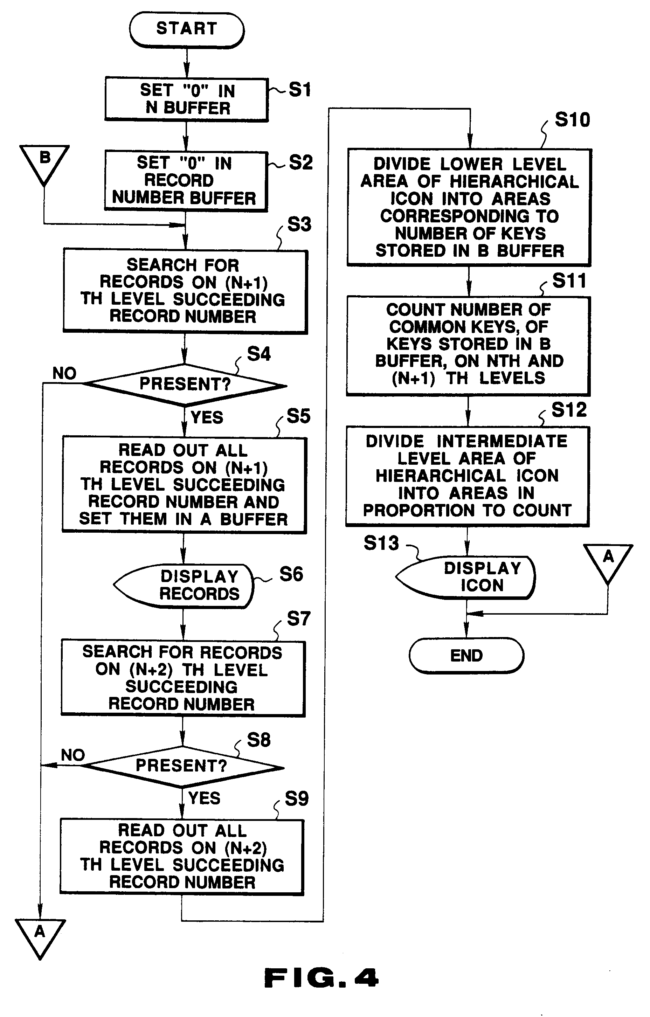

The respective records stored in the disk 18 constitute a hierarchical structure, as shown in Fig. 3. More specifically, Fig. 3 shows record numbers as the keys of the respective records on five levels from the zeroth level to the fourth level.

An operation of the second embodiment will be described below with reference to the flow chart in Fig. 4, which shows an operation sequence of the CPU 11.

Initialization is performed first. More specifically, "0" is set in the N buffer 22 (step S1), and a key "0" as a record number corresponding to a record on the zeroth level is set in the record number buffer 24 (step S2).

Subsequently, the disk 18 is searched in accordance with the record number set in the record number buffer 24 and the level value set in the N buffer 22. That is, records on the (N+1)th level succeeding the set record are searched (step S3). If it is determined after this search that records are present on the (N+1)th level (step S4), all the records are read out and stored in the A buffer 20 (step S5). The contents of all the records stored in the A buffer 20 are displayed on the display section 16 (step S6). With this operation, a record display image 25a corresponding to the records on the level lower than that of the set record by one level is displayed, as indicated by a display screen 16a in Fig. 5A. That is, as the record display image 25a, the records on the first level are displayed together with their keys "01", "02", and "03".

The disk 18 is then searched in accordance with the record number set in the record number buffer 24 and the level value set in the N buffer 22. That is, records on the (N+2)th level succeeding the set record number are searched (step S7). If it is determined after this search that records are present on the (N+2)th level (step S8), all the keys of these records are read out and stored in the B buffer 21 (step S9).

Subsequently, processing is performed to display a hierarchical icon 26a displayed on the display screen 16a in Fig. 5A. In this case, the hierarchical icon 26a is displayed as a triangle in which the key of the currently designated record is positioned on the uppermost level. In this embodiment, the respective keys are arranged to allow quick recognition of the hierarchical structure of the records on the two lower levels succeeding the designated record. More specifically, in this hierarchical icon 26a, the keys of records succeeding a record in the upper level area are displayed in the intermediate level area, and the keys of records succeeding the records in the intermediate level area are displayed on the lower level area. In addition, key divisions in the intermediate level area allow an operator to recognize a specific key in the intermediate level area which a given key in the lower level area succeeds. More specifically, this hierarchical icon visually indicates that the keys "01", "02", and "03" succeed the key "0"; keys "011", "012", and "013", the key "01"; a key "021", the key "02"; and keys "031" and "032", the key "03".

In order to display the hierarchical icon 26a described above, the CPU 11 performs the following processing: dividing the lower level area of the hierarchical icon into areas corresponding to the number of keys stored in the B buffer 21 (step S10); counting the number of common keys on both the (N+1)th level and the Nth level (step S11); dividing the intermediate level area of the hierarchical icon into areas in proportion to the count (step S12); and causing the display section 16 to display the hierarchical icon 26a (step S13).

After the display operation is performed as indicated by the display screen 16a in Fig. 15A, a cursor 27 is moved to the position of a desired key in the hierarchical icon 26a by using the pointing device 14 so as to select the desired key. As a result, a desired record can be instantaneously designated as an input item.

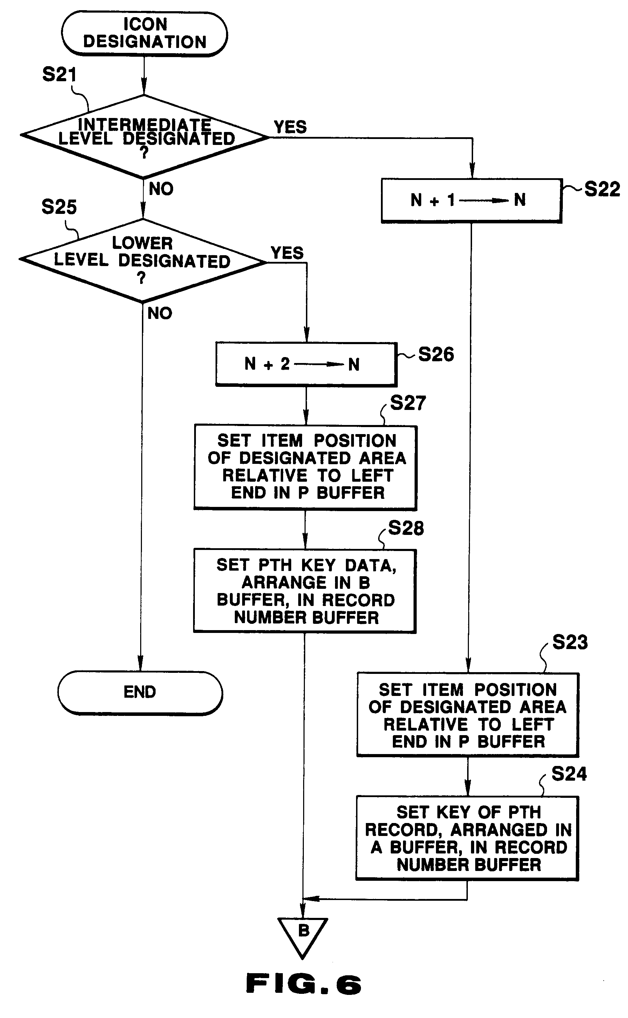

An operation corresponding to this icon designation will be described with reference to the flow chart in Fig. 6.

In the state of the display screen 16a in Fig. 5A, the cursor 27 is moved to the left end item, i.e., the key "01", in the intermediate level area of the hierarchical icon 26a so as to select the key. When the intermdeiate level is designated (step S21), the level value of the N buffer 22 is incremented by "+1" (step S22). The position of the selected/designated item is counted from the left end, and the count value is set in the P buffer 23 (step S23). The A buffer 20 is then searched in accordance with the position set in the P buffer 23 to find a corresponding record. The key of the found record is set in the record number buffer 24 (step S24).

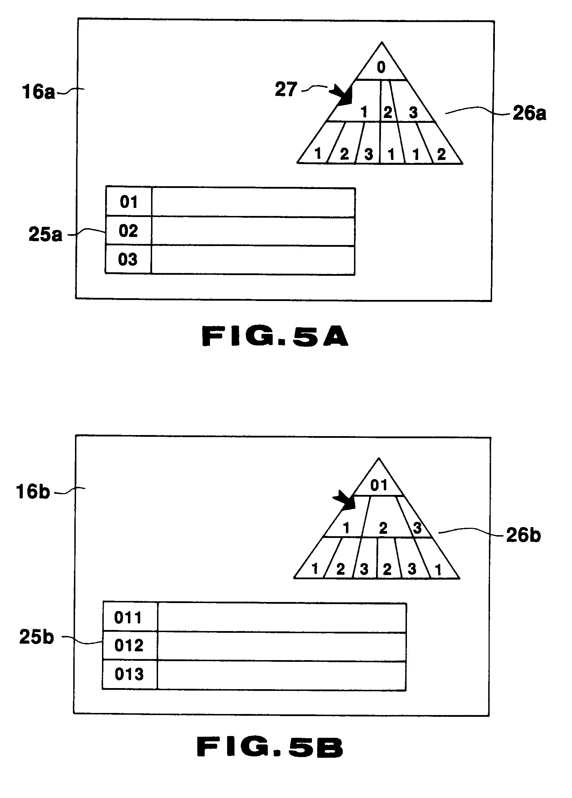

The operations in step S3 and the subsequent steps as described with reference to Fig. 4 are performed in accordance with the level value in the N buffer 22 and the record number in the record number buffer 24, which are updated in the above-described manner. With this operation, the display section 16 has a display screen 16b shown in Fig. 5B, on which a record display image 25b of the second level is displayed. In addition, a hierarchical icon 26b is displayed as a graphic pattern having keys on the second level as the intermediate level under the key "01" on the first level, and keys on the third level as the lower level (only keys succeeding the key "01" on the first level).

Similarly, if the left end item, i.e., the key "011", on the intermediate level of the hierarchical icon 26b on the display screen 16b in Fig. 5B is designated, a display screen 16c shown in Fig. 5C is obtained. More specifically, a record display image 25c of the third level is displayed, and a hierarchical icon 26c is displayed as a graphic pattern having keys on the third level as the intermediate level under the key "011" on the second level, and keys on the fourth level as the lower level (only keys succeeding the key "011" on the second level).

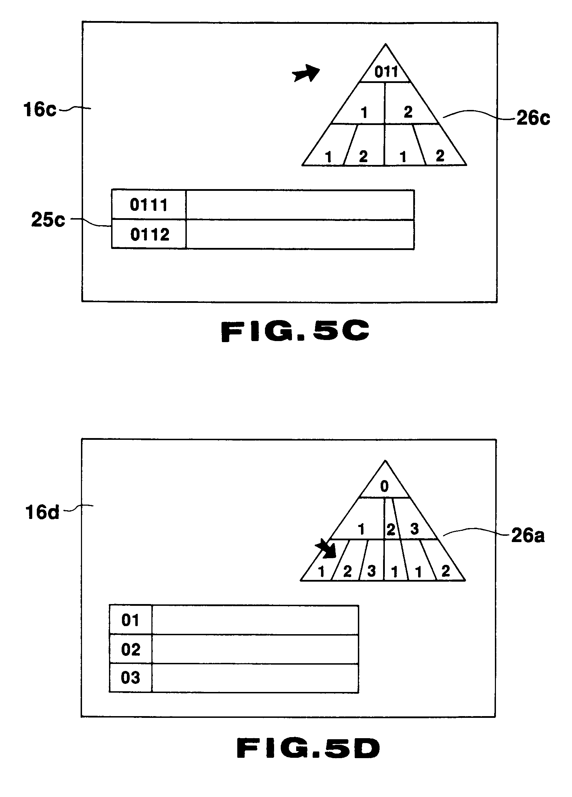

In addition, as indicated by a display screen 16d in Fig. 5D, a key on the lower level of the hierarchical icon 26a can be designated. When a lower level is designated in this manner (step S25), the level value of the N buffer 22 is incremented by "+2" (step S26). The position of the selected/designated item is counted from the left end, and the count value is set in the P buffer 23 (step S27). The B buffer 21 is then searched in accordance with the position set in the P buffer 23, and a corresponding key is set in the record number buffer 24 (step S28).

The operations in step S3 and the subsequent steps described with reference to Fig. 4 are performed in accordance with the level value in the N buffer 22 and the record number in the record buffer 24, which are updated in the above-described manner. With this operation, the display section 16 immediately has the display screen 16c shown in Fig. 5C.

As described above, even while data is input to a given record, a hierarchical icon is displayed to allow quick recognition of records succeeding the given record. Therefore, a user can easily designate a desired record as a new input item by using the pointing device.

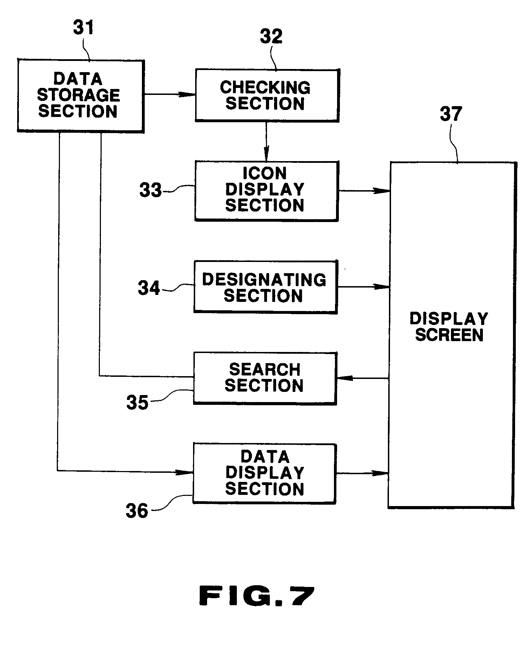

The third embodiment of the present invention will be described below with reference to the block diagram in Fig. 7.

A data display apparatus of this embodiment comprises: a data storage section 31 for storing a plurality of record data or a plurality of data such as image data; a checking section 32 for checking the number of record data or of image data by performing a specific designating operation using a pointing device or the like; an icon display section 33 for displaying an icon having divided areas corresponding to the number of record data on a display screen 37; a designating section 34 for designating an arbitrary area of the plurality of areas displayed on the icon by performing a designating operation using the pointing device or the like; a search section 35 for searching for data corresponding to the designated area; and a data display section 36 for reading out the searched data from the storage section 31 and displaying it on the display screen 37.

An operation of the third embodiment will be described below.

Assume that the first record is currently displayed on the display screen 37. If the 11th record is to be designated in this state, a specific designating operation is performed. With this operation, the checking section 32 is started to check the number of all record data. Assume, in this case, that 12 record data are present. The icon display section 33 displays an icon divided into areas corresponding to the checked number, i.e., 12, on the display screen 37. An operator designates a position corresponding to the record data to be read out, i.e., the 11th display area, by using a pointing device or the like while watching the icon on the display screen 37. Then, the search section 35 is started to search for record data corresponding to the designated area, i.e., the 11th record data. This record data is then read out from the data storage section 31 and is displayed on the display screen 37.

Desired data, therefore, can be instantaneously read out and displayed, even if it is not current displayed, without reading out and checking all the target data one by one.

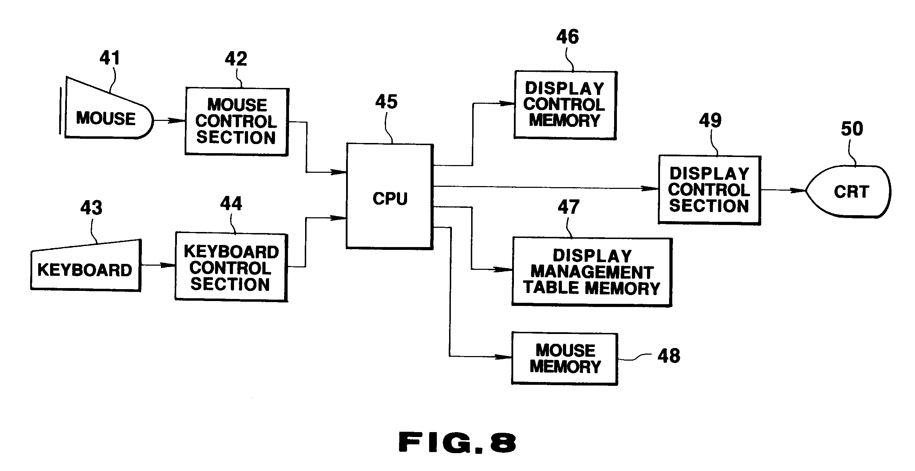

The fourth embodiment of the present invention will be described below with reference to Figs. 8 through 14.

Fig. 8 is a block diagram showing an arrangement of a data display apparatus of this embodiment. Operation signals from a mouse as a pointing device 41 and from a keyboard 43 are input to a CPU 45 through a mouse control section 42 and a keyboard control section 44. In order to display a record selection icon or a screen selection icon on the display screen of a CRT 50, the CPU 45 receives information from a mouse memory 48 and supplies the information to a display control section 49. Information selected from the icon displayed on the display screen by the mouse 41 is input to the CPU 45.

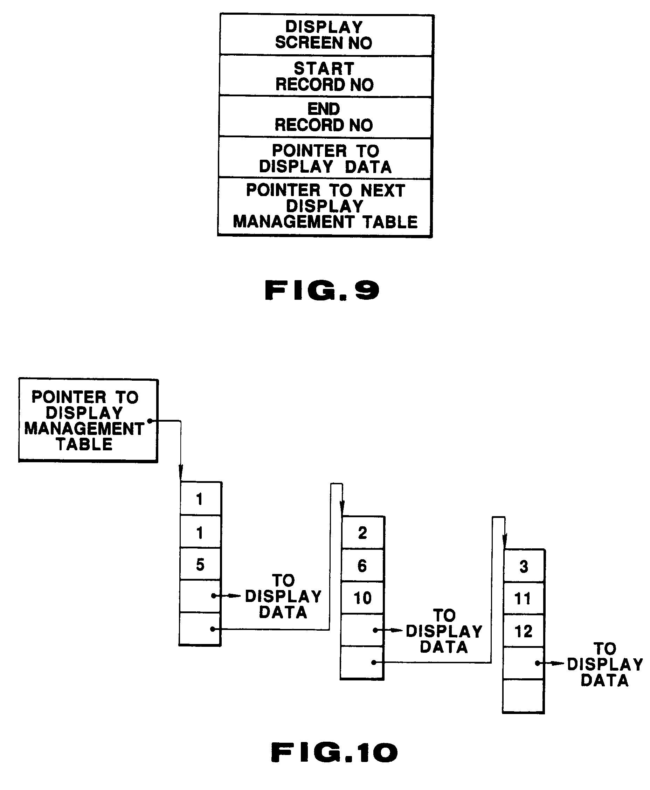

The CPU 45 searches a display management table memory 47 in accordance with the input information, reads out display information of a corresponding display screen, and stores it in a display control memory 46. This display management table memory 47 stores a plurality of management tables and display data corresponding to the respective display screens. As shown in Fig. 9, each management table stores a start record number, an end record number, a pointer to display data, and a pointer to the next management table in units of screens. Fig. 10 shows a connection arrangement of management tables.

The display control section 49 fetches display data stored in the display control memory 46 and displays it on the display screen of the CRT 50.

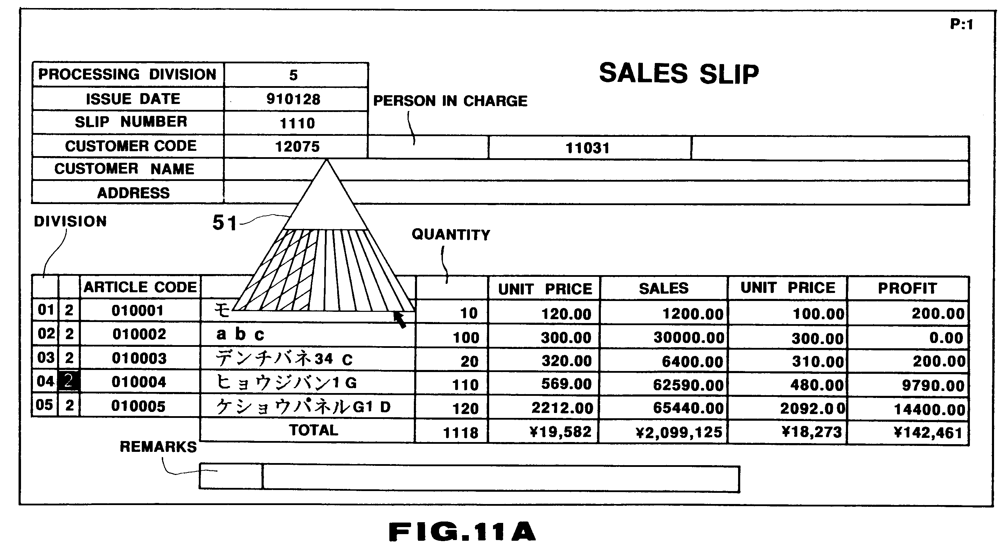

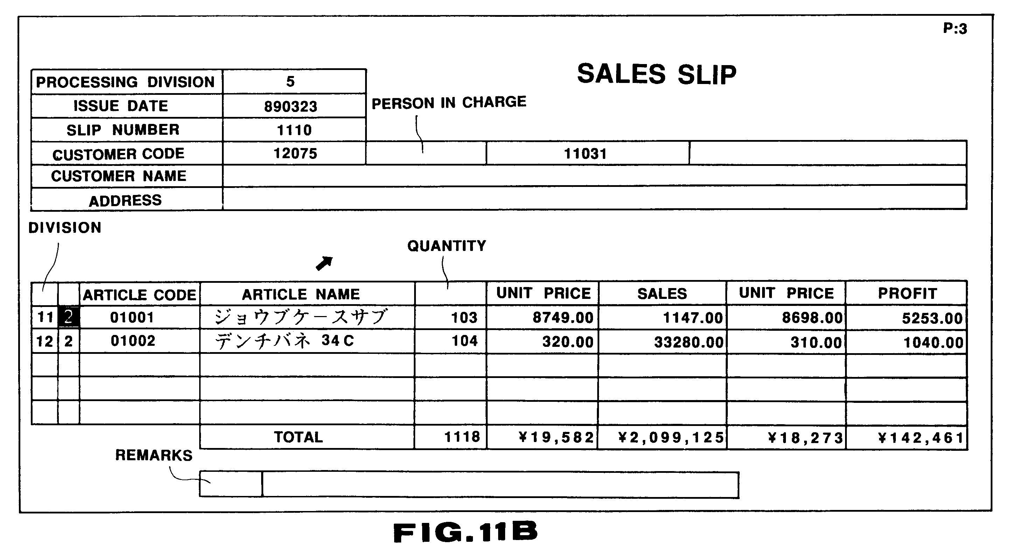

Figs. 11A and 11B respectively show display images in the fourth embodiment.

Assume that five records can be displayed per page, and the first page is currently displayed. In this case, although the first to fifth records are displayed on the first page, if the 11th record is to be designated from this display screen, a record selection icon 51 is displayed by operating the mouse 41. Since the number of records is 12 in this case, 12 division areas are displayed in the icon 51 and five areas starting from the left end are reverse-displayed, as shown in Fig. 11A. This reverse display corresponds to the positions of the currently displayed records (first to fifth records).

If the position of the 11th division area of the division areas of the icon 51 is designated by the mouse 41, and the left button of the mouse 41 is depressed, a display screen including the 11th record, i.e., a display screen of the third page is displayed, and the cursor is moved to the 11th record, as shown in Fig. 11B.

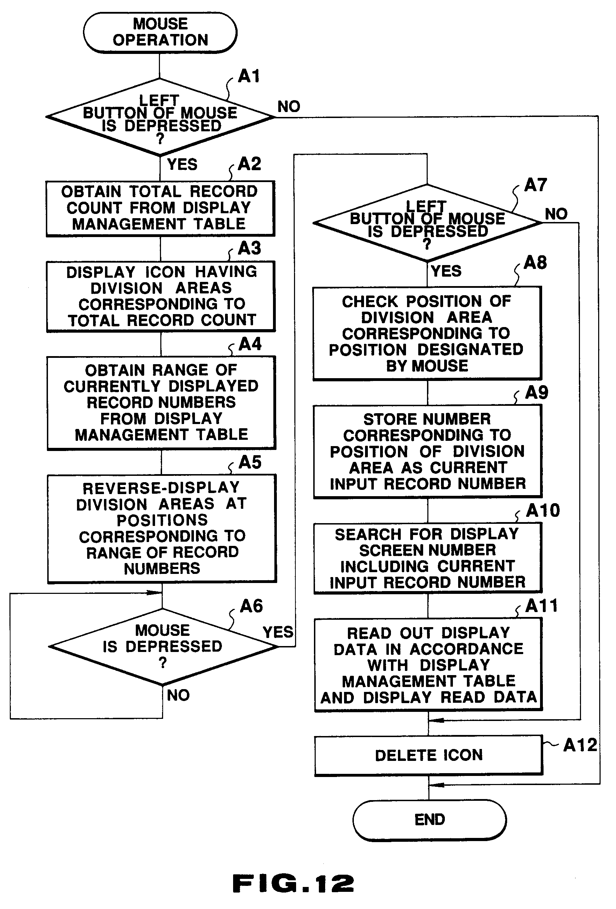

Fig. 12 is a flow chart for explaining an operation of the fourth embodiment.

If the left button of the mouse 41 is depressed (step A1), a total record count is obtained by using the display management table memory 47 (step A2). The record selection icon 51 is divided into areas in accordance with this total record count and is displayed (step A3). The range of the record numbers of the currently displayed records is checked by using a management table currently designated in the display management table memory 47 (step A4). Division areas at the positions corresponding to this record number range are reverse-displayed (step A5). With this operation, an operator can recognize the positions of the currently displayed records on the record selection icon 41 in relation to all the records (step A6).

Subsequently, it is checked whether a button of the mouse 41 is depressed (step A6). If the left button is depressed (step A7), the position of a division area corresponding to the display position designated by the mouse 41 is checked (step A8). The corresponding record number is stored as the current input record number (step A9). A display screen number including this input record number is searched from the display management table memory 47 (step A10), and a management table corresponding to this display screen number is designated, thus reading out and displaying the display data of the corresponding display screen on the basis of the designated management table (step A11). Thereafter, the record selection icon 51 is deleted from the display screen (step A12).

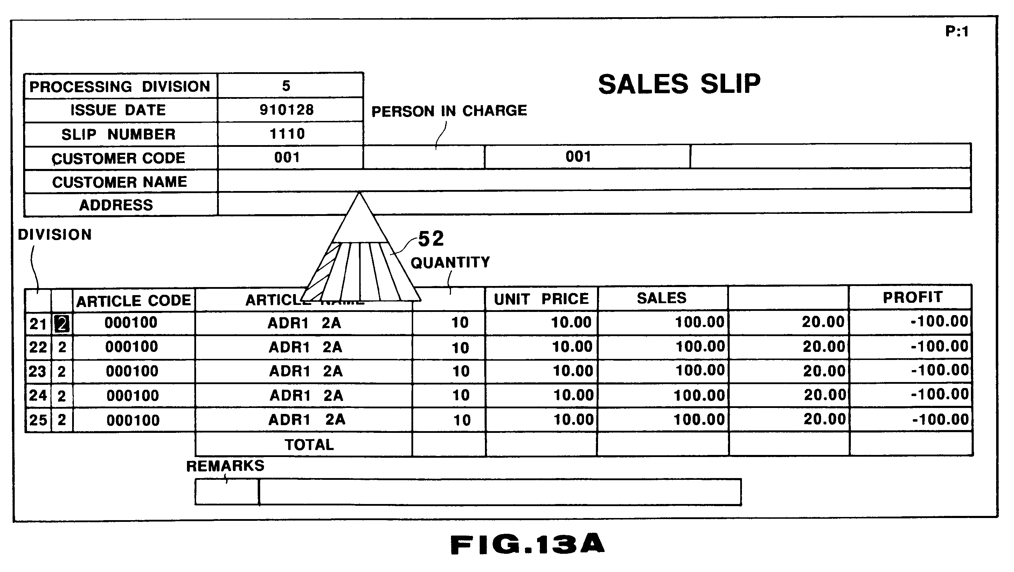

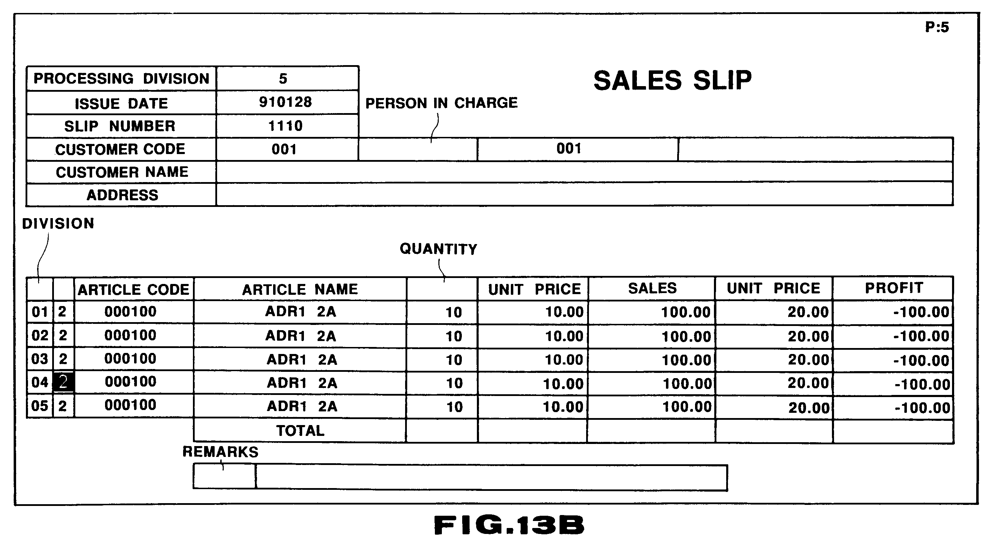

Figs. 13A and 13B show other display images in the fourth embodiment.

In this case, a screen selection icon 52 is displayed on the display screen, and the current display screen can be instantaneously switched to another display screen by using this icon 52. More specifically, in the screen selection icon 52, one division area indicates one display screen. In the case shown in Fig. 13A, the screen selection icon 52 is divided into six division areas. This indicates that display screens corresponding to six pages are present. Since the first page is currently displayed, the first division area is reverse-displayed. In this case, if the fifth display screen, i.e., records on the fifth page, are to be displayed, the position of the fifth division area from the left end of the screen selection icon 52 is designated by the mouse 41.

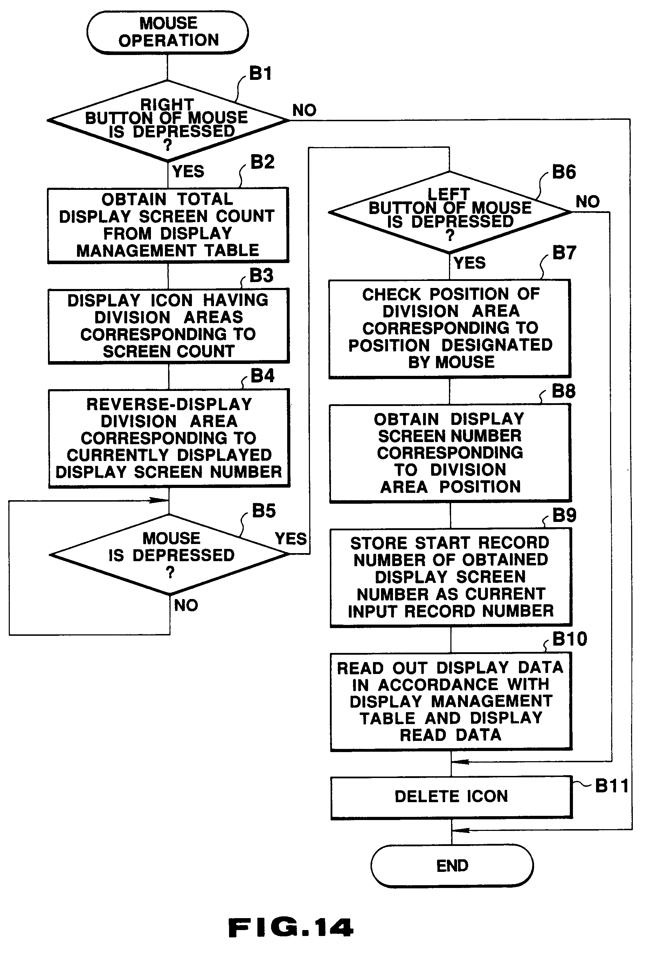

Fig. 14 is a flow chart for explaining this operation.

If the right button of the mouse 41 is depressed (step B1), a total display screen count is obtained from the display management table memory 47 (step B2). As a result, the screen selection icon 52 divided into areas in accordance with the total display screen count is displayed (step B3). A division area at the position corresponding to the number of the currently displayed display screen is reverse-displayed (step B4). With this operation, an operator can recognize the relative position of the currently displayed display screen. If the left button of the mouse 41 is depressed after this operation (steps B5 and B6), the position of the division area designated by the mouse 41 is checked (step B7), and a display screen number corresponding to this position is obtained (step B8). By using the display screen number obtained in this manner, a start record number stored in the display management table memory 47 in accordance with this display number is read out and is stored as the current input record number (step B9). One-screen display data is then read out on the basis of a management table corresponding to the display screen number and is displayed, as shown in Fig. 13B (step B10). Thereafter, the screen selection icon 52 is deleted from the display screen (step B11).

## Claims

1. A data display apparatus for a quick display of designated data, comprising:
storage means (31) for storing a plurality of records; and
record displaying means (35, 36) for reading out a record from said storage means and for displaying the read out record on a display screen;
**characterized by**
counting means (32) for counting the number of records stored in the storage means;
icon display means (33) for displaying an icon having a plurality of display areas corresponding to the number of records counted by said counting means, wherein each of the plurality of display areas of the icon is in a one-to-one correspondence with a respective one of the plurality of records stored in said storage means;
selecting means (34, 41) for selecting one of the plurality of display areas of the displayed icon; wherein
the record read out by said record display means (35, 36) corresponds to the selected display area of the displayed icon.

2. The data apparatus according to claim 1, characterised in that there is further provided:
a control means (45, step A4 and A5) for distinctively display-controlling the display areas of the icons corresponding to a pre-determined number of records displayed on the display screen, wherein the predetermined number of records is arbitrarily selected among the plurality of records stored in the memory.

3. A data display apparatus for quickly displaying designated data, comprising:
storage means (18) for storing a plurality of records; and
record displaying means (16) for displaying on a display screen a predetermined number of records of the plurality of stored records;
**characterized by**
the fact that the records stored in said storage means (18) are linked in a hierarchical tree structure;
first counting means (11) for counting the number of second records having a direct hierarchical relationship to a first designated record of the plurality of stored records;
second counting means (11) for counting the number of third records having an indirect hierarchical relationship to the first designated record via the stored records having direct said hierarchical relationship; and by
icon displaying means (16, 11) for displaying on the display screen a first icon having first display areas equal to the number counted by the first counting means, each of the first display areas being in one-to-one correspondence with a respective one of the second records, and for displaying a second icon having second display areas equal to the number of third records counted by the second counting means, wherein each of the second display areas being in one-to-one correspondence with a respective one of the third records;
wherein the record displaying means (16) displays a record on the display screen upon the icon corresponding to said record has been selected.

## Patentansprüche

1. Datenanzeigevorrichtung zur schnellen Anzeige bezeichneter Daten, umfassend:
eine Speichereinrichtung (31) zur Speicherung einer Mehrzahl von Datensätzen; und
eine Datensatzanzeigeeinrichtung (35, 36) zum Auslesen eines Datensatzes aus der Speichereinrichtung und zur Anzeige des ausgelesenen Datensatzes auf einem Anzeigeschirm; **gekennzeichnet durch**
eine Zähleinrichtung (32) zum Zählen der Anzahl von in der Speichereinrichtung gespeicherten Datensätzen;
eine Bildzeichenanzeigeeinrichtung (33) zur Anzeige eines Bildzeichens, das eine Mehrzahl Anzeigebereiche aufweist, die der Anzahl von Datensätzen entspricht, die von der Zähleinrichtung gezählt wurden, wobei jeder der Mehrzahl von Anzeigebereichen des Bildzeichens eine eins-zu-eins Entsprechung mit einem der Mehrzahl von Datensätzen hat, die in der Speichereinrichtung gespeichert sind;
eine Auswähleinrichtung (34, 41) zum Auswählen von einem der Mehrzahl von Anzeigebereichen des angezeigten Bildzeichens; wobei
der von der Datensatzanzeigeeinrichtung (35, 36) ausgelesene Datensatz dem ausgewählten Anzeigebereich des angezeigten Bildzeichens entspricht.

2. Datenanzeigevorrichtung gemäß Anspruch 1, **dadurch gekennzeichnet**, daß des weiteren eine Steuereinrichtung (45, Schritt A4 und A5) zur unterscheidenden Anzeigesteuerung der Anzeigebereiche des Bildzeichens vorgesehen ist, die einer vorbestimmten Anzahl von auf dem Anzeigeschirm angezeigten Datensätzen entsprechen, wobei die vorbestimmte Anzahl von Datensätzen beliebig aus der Mehrzahl von Datensätzen ausgewählt wird, die in dem Speicher gespeichert sind.

3. Datenanzeigevorrichtung zur schnellen Anzeige bezeichneter Daten, umfassend:
eine Speichereinrichtung (18) zur Speicherung einer Mehrzahl von Datensätzen; und
eine Datensatzanzeigeeinrichtung (16) zur Anzeige einer vorbestimmten Anzahl von Datensätzen der Mehrzahl gespeicherter Datensätze auf einem Anzeigeschirm; **gekennzeichnet durch**
die Tatsache, daß die in der Speichereinrichtung (18) gespeicherten Datensätze in einer hierarchischen Baumstruktur verbunden sind;
eine erste Zähleinrichtung (11) zum Zählen der Anzahl von zweiten Datensätzen, die eine direkte, hierarchische Beziehung zu einem ersten, bezeichneten Datensatz aus der Mehrzahl von gespeicherten Datensätzen aufweist;
eine zweite Zähleinrichtung (11) zum Zählen der Anzahl von dritten Datensätzen, die eine indirekte, hierarchische Beziehung zu dem ersten, bezeichneten Datensatz über die gespeicherten Datensätze aufweist, die direkt die hierarchische Beziehung aufweisen; und durch eine Bildzeichenanzeigeeinrichtung (16, 11) zur Anzeige eines ersten Bildzeichens auf dem Anzeigeschirm, das erste Anzeigebereiche gleich der Anzahl aufweist, die von der ersten Zähleinrichtung gezählt worden ist, wobei jeder der ersten Anzeigebereiche eine eins-zu-eins Entsprechung mit einem entsprechenden der zweiten Datensätze aufweist, und zur Anzeige eines zweiten Bildzeichens, das zweite Anzeigebereiche gleich der Anzahl wie die der dritten Datensätze aufweist, die von der zweiten Zähleinrichtung gezählt worden sind, wobei jeder der zweiten Anzeigebereiche eine eins-zu-eins Entsprechung mit einem entsprechenden der dritten Datensätze aufweist;
wobei die Datensatzanzeigeeinrichtung (16) einen Datensatz auf dem Anzeigeschirm anzeigt, nachdem das Bildzeichen, das dem Datensatz entspricht, ausgewählt worden ist.

## Revendications

1. Dispositif d'affichage de données pour l'affichage rapide de données désignées, comprenant :
des moyens de mémorisation (31) pour mémoriser une pluralité d'enregistrements ; et
des moyens d'affichage d'enregistrement (35, 36) pour extraire un enregistrement desdits moyens de mémorisation et pour afficher l'enregistrement extrait sur un écran d'affichage ;
caractérisé par
des moyens de comptage (32) pour compter le nombre d'enregistrements mémorisés dans les moyens de mémorisation ;
des moyens d'affichage d'icône (33) pour afficher une icône comportant une pluralité de zones d'affichage correspondant au nombre d'enregistrements comptés par lesdits moyens de comptage, dans lequel chacune de la pluralité de zones d'affichage de l'icône est dans une correspondance une-à-une avec un enregistrement respectif de la pluralité d'enregistrements mémorisés dans lesdits moyens de mémorisation ;
des moyens de sélection (34, 41) pour sélectionner l'une de la pluralité de zones d'affichage de l'icône affichée ; dans lequel
l'enregistrement extrait par lesdits moyens d'affichage d'enregistrement (35, 36) correspond à la zone d'affichage sélectionnée de l'icône affichée.

2. Dispositif d'affichage de données selon la revendication 1, caractérisé en ce que sont prévus, de plus :
des moyens de contrôle (45, étapes A4 et A5) pour contrôler distinctement l'affichage des zones d'affichage des icônes correspondant à un nombre prédéterminé d'enregistrements affichés sur l'écran d'affichage, dans lequel le nombre prédéterminé d'enregistrements est sélectionné arbitrairement parmi la pluralité d'enregistrements mémorisés dans la mémoire.

3. Dispositif d'affichage de données pour l'affichage rapide de données désignées, comprenant :
des moyens de mémorisation (18) pour mémoriser une pluralité d'enregistrements ; et
des moyens d'affichage d'enregistrement (16) pour afficher sur un écran d'affichage un nombre prédéterminé d'enregistrements de la pluralité d'enregistrements mémorisés ;
caractérisé par
le fait que les enregistrements mémorisés dans lesdits moyens de mémorisation (18) sont liés dans une structure arborescente hiérarchisée ;
des premiers moyens de comptage (11) pour compter le nombre de seconds enregistrements ayant une relation hiérarchique directe avec un premier enregistrement désigné de la pluralité d'enregistrements mémorisés ;
des seconds moyens de comptage (11) pour compter le nombre de troisièmes enregistrements ayant une relation hiérarchique indirecte avec le premier enregistrement désigné via les enregistrements mémorisés ayant ladite relation hiérarchique directe ; et
des moyens d'affichage d'icône (16, 11) pour afficher sur l'écran d'affichage une première icône comportant des premières zones d'affichage égales au nombre compté par les premiers moyens de comptage, chacune des premières zones d'affichage étant dans une correspondance une-à-une avec un enregistrement respectif des seconds enregistrements, et pour afficher une seconde icône comportant des secondes zones d'affichage égales au nombre de troisièmes enregistrements comptés par les seconds moyens de comptage, dans lequel chacune des secondes zones d'affichage est dans une correspondance une-à-une avec un enregistrement respectif des troisièmes enregistrements ;
dans lequel les moyens d'affichage d'enregistrement (16) affichent un enregistrement sur l'écran d'affichage lorsque l'icône correspondant audit enregistrement a été sélectionnée.
